# EUROPEAN PATENT SPECIFICATION

(11) **EP 2 821 287 B1**
(45) Date of publication and mention of the grant of the patent: **23.12.2015**
(21) Application number: 14173962.3
(22) Date of filing: 25.06.2014
(51) Int. Cl.: B60R 15/04, A47K 11/03, E03D 11/11

(54) **Two-tank chemical WC for vehicles, in particular but not necessarily campervans and motorhomes**
Chemisches Zwei-Tank-WC für Fahrzeuge, insbesondere, aber nicht unbedingt, für Wohnmobile und Campmobile
WC chimique à deux réservoirs pour véhicules, en particulier, mais pas nécessairement camping-cars et mobile-homes

(30) Priority: 28.06.2013 IT FI20130155
(43) Date of publication of application: 07.01.2015
(73) Proprietor: LAIKA CARAVANS S.p.A., 50028 Tavarnelle Val di Pesa (FI) (IT)
(72) Inventor: Gabbrielli, Francesco, 50028 Tavarnelle Val di Pesa (Firenze) (IT)
(74) Representative: Soldatini, Andrea

(56) References cited:
- WO-A1-2012/146767
- WO-A2-2006/002256
- US-A- 3 040 333
- US-A- 5 056 166

## Description

The present invention regards the field of the chemical toilets for recreational vehicles such as typically, but not exclusively, campervans and motorhomes. In particular, it regards a new WC (intended as a toilet bowl integrating the discharge system and optionally even the flush system) with two discharge tanks.

In the vehicles mentioned above there is universally known the use of chemical WC such as the one disclosed in international PCT patent publication n. WO2012/146767, in which the discharge of the waste occurs in a tank arranged beneath the actual bowl, tank in which, before each use cycle, there are introduced appropriate additives intended to chemically neutralise the waste. The aforementioned cycle ends when a tank reaches a maximum fill level, an event that is detected by a suitable sensor and which requires the removal and subsequent clearing of the tank of liquid manure, at special and authorised points of disposal. The extraction of the tank occurs through a rear service port, directly accessible from outside the vehicle, and which obviously also serves for the new loading of the tank once emptied.

Thus, it is actually the need of handling the tank for the emptying operations that sets a filling capacity, exceeding which would lead to the impossibility, or extreme difficulty, to remove and transport the tank in question. This limitation leads to a problem related with the capacity of toilet (duration limit of the use cycle), which the manufacturers have tried to overcome by providing an extra tank to be kept empty in the housing compartment of the vehicle. This obviously leads to problems as far as space is concerned, which are even more felt if it is considered that in this context there arises the need for an extreme optimisation of available volumes. In addition, replacement is however an operation which interrupts the functionality of the WC and it cannot be attained under all circumstances of use of the vehicle.

The object of the present invention is to address such problems by providing a chemical WC for vehicles having a high usage capacity without requiring extra/replacement tanks outside the WC.

A particular object of the present invention is to provide a chemical WC of the aforementioned type having a high prerogative of comfort of use and maintenance, in particular, but not solely, as regards the functions of transporting the tanks towards the disposal point.

These and other objects are attained by the chemical WC with two tanks for vehicles, in particular but not necessarily campervans and motorhomes, according to the present invention, whose essential characteristics are defined in the first of the attached claims.

Further important characteristics are outlined in the dependent claims.

The characteristics and advantages of the two-tank chemical WC for vehicles, in particular but not necessarily campervans and motorhomes according to the present invention shall become apparent from the following description of an embodiment thereof provided solely by way of non-limiting example with reference to the attached drawings, wherein:
- figure 1 and figure 2 are axonometric front elevational views of the WC according to the invention respectively in a first and in a second use configuration corresponding to discharge respectively in a first and in a second tank;
- figure 3 is an axonometric bottom view of the WC in the second use configuration, corresponding to that of figure 2 (discharge in the second tank);
- figure 4 and figure 5 show axonometric cross-sectional views of the WC respectively in the first and second use configuration;
- figure 6, figure 6a and figure 7 partly represent the WC in the first use configuration, with a lock device in disabled condition, respectively in axonometric cross-sectional view (figure 6), in enlarged view of an area of a claw of the lock device (figure 6a), and through a median section (figure 7);
- figure 8 and 9 show in isolation, still in axonometric bottom view, the second discharge tank of the WC of the previous figures, with a transport handle in two subsequent extraction positions (parts of the lock device being omitted in figure 9); and
- figure 10 and figure 11 show, in axonometric elevational views, from different angles, the two superimposed discharge tanks in a transport configuration.

With reference to the above figures, the chemical WC for recreational vehicles according to the invention comprises a toilet bowl 1, supported by a base box-like frame 2, and having all the structural and functional characteristics common in the prior art, per se not part of the present invention and neither described nor illustrated in detail herein. Such known characteristics may include integration with a flush system or a pre-setting for association with such system.

The box-like frame 2 has an elongated parallelepiped shape according to a longitudinal axis X which corresponds to the front-rear direction of the bowl 1, where the front side, indicated with 12, is defined as the side the user approaches in the use of the bowl, and the rear one is the opposite side 13, facing a wall (not shown) of the housing compartment intended to be used as a lavatory. The box-like frame 2, and more precisely a housing 3 defined thereby, movably houses a group of discharge tanks which represents indeed the core aspect of the invention.

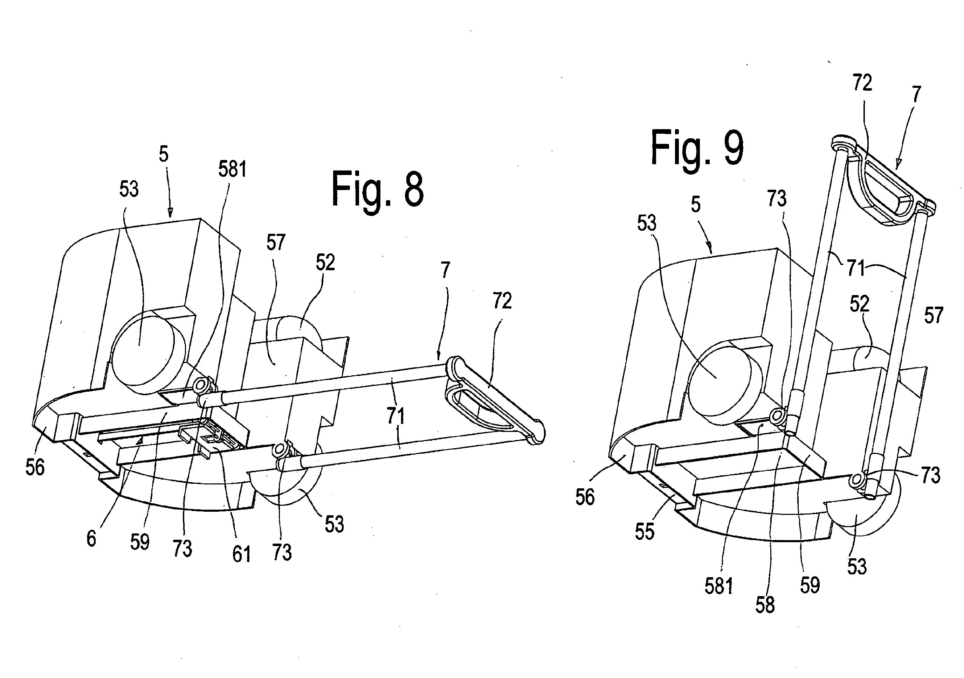

According to the invention, the group of discharge tanks is actually made up of two tanks, a first tank 4 and a second tank 5, arranged consecutively adjacent to each other along the longitudinal axis, the first tank 4 being the one arranged towards the rear side of the WC. The tanks are provided with respective top intakes 41, 51 in mutually aligned position for communication with the bowl 1 and collecting the waste through the lower opening thereof, indicated with 11. The tanks also provide for devices and interfaces of the known type already commonly used (level sensors, discharge pipes, aeration valves etc.), also per se not part of the present invention. Only the discharge pipes 42, 52 are represented and visible on the upper part of the tanks in figures 8 to 11.

Both tanks are provided with a pair of wheel axles 43, 53 which facilitate the sliding into the housing 3, sliding required for the extraction and re-insertion, like in the prior art WCs, through a service port, not represented, obtained in the aforementioned wall on which the rear side of the frame 2 rests. The wheels 43 and 53, still according to the provisions of the prior art, may also serve for facilitating the transport of the tanks, once extracted, resting on the ground towards the point of disposal.

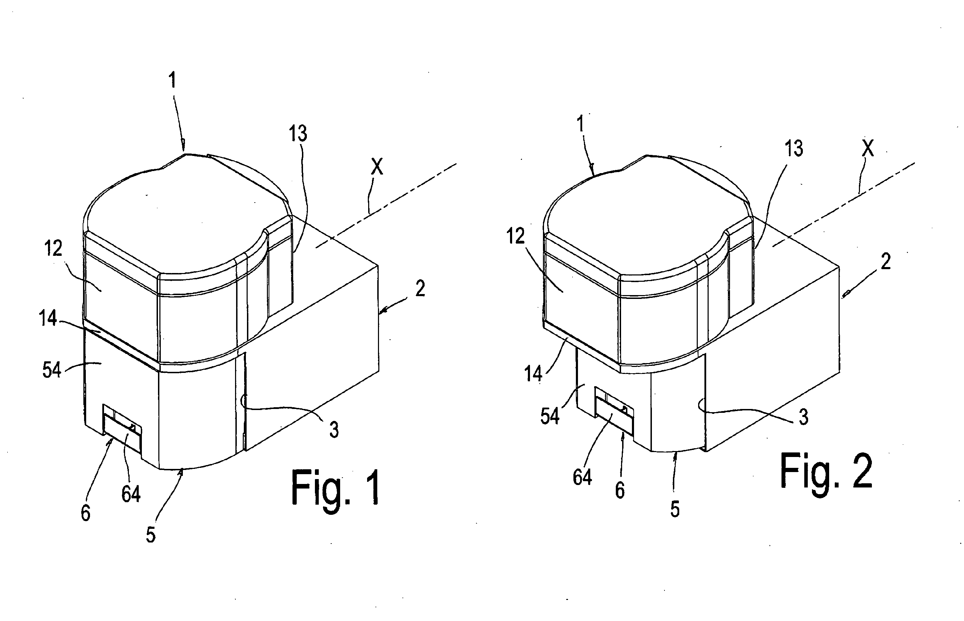

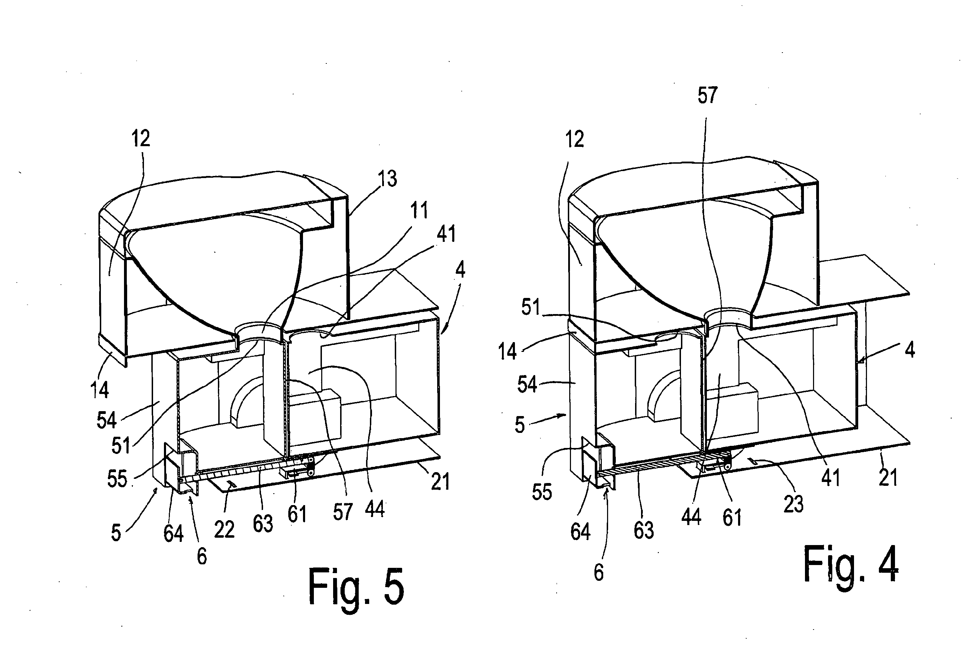

Returning to the characterising aspects of the invention, the mobility (on wheels) of the two tanks has a further characteristic in this case, related with the possibility of placing one or the other of the two top intakes 41, 51, in communication with the bowl (suitable sealing gaskets obviously being provided for), such two options corresponding to: a first use configuration, advanced at the front part (figures 1 and 4) up to aligning a front side 54 of the second tank 5 with the front side 12 of the bowl 1, in which it is the intake 41 of the first tank 4 that can receive the waste; and a second use configuration, retracted (figures 2, 3 and 5), in which it is the intake 51 of the second tank 5 that comes into operation. It shall be observed that the two configurations are advantageously implemented in time sequence, with the second configuration replacing the first one, through a simple manual push by the user, when the first tank 4, or rear tank, reaches the maximum filling level and it is thus replaced by the second tank 5, or front tank.

In the first use configuration the stop against a frontal sliding out of the group of the tanks is advantageously guaranteed by the abutment of the front side 54 against a stop lip 14 projecting downwards from the front side 12 of the bowl 1. The stop against the rear outlet in the second use configuration is instead clearly obtained by the abutment on the service port, which closes the housing 3 at the rear part. However, in both configurations there is required a further lock that hinders the unwanted retraction from the first to the second configuration, and the unwanted return advancement from the second to the first. For such purpose there is provided a lock device 6 which can be actuated for the disabling thereof on the front side 54 of the second tank 5.

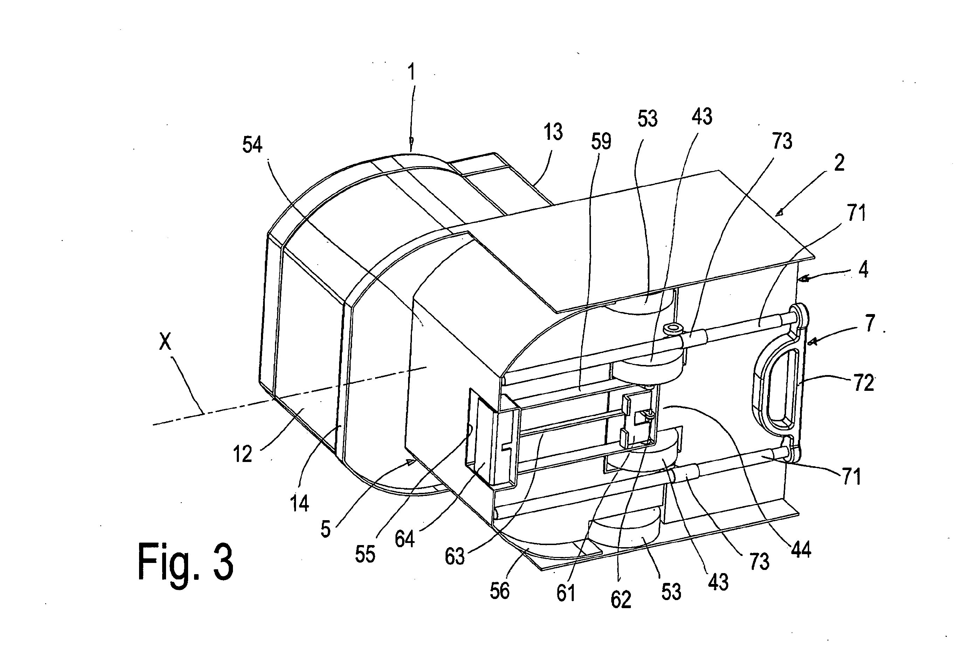

More in detail, in the illustrated example the lock device 6 (in particular see figures 3, 6 and 7) comprises a claw 61, adapted to be engaged in the two aforementioned use configurations, in respective pairs of cavities 22, 23 formed in suitable positions on a bottom 21 of the box-like frame 2. The claw 61 is articulated to a crank 62 in turn pivotally supported by the bottom of the second tank 5, so that upon a rotation of the crank, around an axis parallel to the bottom 21 and crosswise, i.e. orthogonal to the longitudinal axis, covering a given angle, there responds the passage of the claw between a lock abutment condition, engaged with either pair of cavities 22, 23, and a raised unlock condition, in which it disengages from the cavities and thus allows the movement between the first and the second use configuration and vice versa. All these components are hidden by a front lid 56 which, along with the wheels 53, keeps the bottom of the tank slightly spaced/raised, forming a gap with the bottom 21 of the frame that defines the support plane of the tanks.

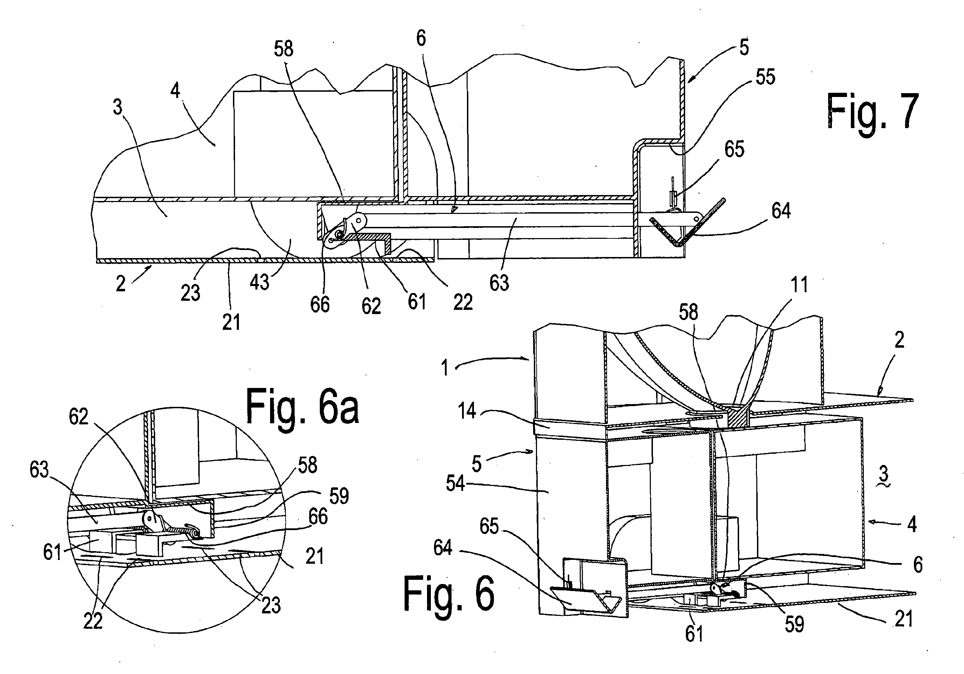

The rotation of the crank 62 is controlled by a rod 63 which extends longitudinally in the above mentioned gap up to an end which protrudes outside the front wall 54, and more precisely in a nook 55 formed therein (and in the lid 56). In such nook there is pivotally supported a handgrip 64, articulated to the outer end of the rod 63 so that manually pulling the handle causes the pulling of the rod, the ensuing rotation of the crank 62 and thus the passage of the claw from the lock condition to the unlock condition. The natural return to the other condition, in absence of external actuation, is controlled by elastic means. Such elastic means for example and preferably comprise at least one first spring 65 mounted on the rotation pin of the handle 64 so as to cause its return motion, and a second spring 66 mounted on the rotation pin of the claw. The springs 65 and 66 are represented and at least partly visible in figures 6, 6a and 7.

According to another significant aspect of the invention, the two tanks 4 and 5 preferably have a shape adapted both to stabilise the unit in the two use configurations and in the switch between them, and to assist the transport of the entire unit towards the disposal point, once extracted from the housing 3. As a matter of fact, the two tanks are coupled with each other - at the walls at mutual contact when arranged in sequence in the housing 3 (i.e. a front wall of the first tank and a rear wall of the second tank) - via a protrusion and a recess formed centrally, i.e. astride the longitudinal axis X, and substantially matching with each other. In practice, in the example, the first tank 4 has a front protrusion 44 which is housed by a rear recess 57 of the second tank 5. The top intakes 41, 51 open respectively on the cover wall of the protrusion 44 and, on the first tank, on the relative cover wall in a position adjacent to the recess 57, so that the reduced distance between the two intakes minimizes the extent of the run between the two use configurations.

While the wheels 53 of the tank provided with the recess - in this case and advantageously the second tank or front tank 5 - are arranged outside, right in correspondence with the recess 57, the wheels 43 are located on respective sides of the protrusion 44, in both cases the wheels being arranged in appropriate niches so as not to generate an additional bulk in the crosswise direction. Alike the wheels 53, also the wheels 43 raise, with respect to the support plane, the bottom of the relative tank.

In order to allow the coupling between the two tanks and simultaneously stabilising the position of the first tank 4, the bottom of the front tank 5 projects with a flat piece 58 in the recess 57, peripherally contoured by a portion of a lip 59 which protrudes in the said gap developing around the lock device 6, thus physically isolating and protecting it. However, the flat piece 58 leaves two side slots 581 free in the recess (adjacent to respective sides of the recess 57), so that the flat piece is adapted to provide a resting support to the bottom of the protrusion 44 and at the same time it allows the insertion of the wheels 43.

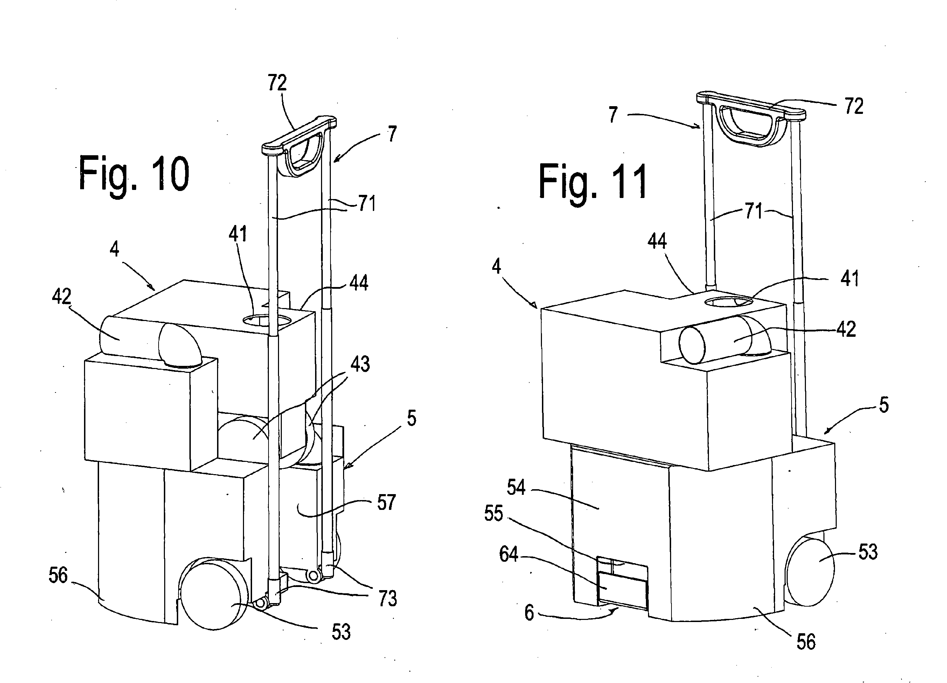

Thus, the mutually coupled arrangement is absolutely firm, once removed from the housing 3 the tanks may be superimposed thus obtaining an equally stable configuration. Indeed, with particular reference to figures 10 and 11, the front tank 5 is arranged 5 below and the recess 57 perfectly fits the projecting part of the wheels 43 of the rear tank, resting with its the bottom on the cover wall of the front tank. In such superimposed arrangement, according to a further aspect of the invention, the transport is assisted by a handle 7 associated to the lower tank, i.e. the front tank 5.

In particular, with reference to figures 3, 8 and 9, the handle 7 is a structure with two telescopic posts 71, joined at the ends by a grip 72, according to a solution per se well known in the luggage manufacturing field. The posts 71 are slidingly engaged in respective hinges 73 pivotally supported by the tank 5 at the corners defined between the recess 57 and the rear wall. The hinges 73 rotate by a substantially right angle, hence in the two end stop positions the posts are arranged either parallel (and adjacent) to the bottom (figures 3 and 8) or perpendicular to the bottom (and thus parallel and adjacent to the rear wall like in figure 9, and in figures 10 and 11).

The first of such positions allows arranging the handle in a concealed fashion beneath the tank group, i.e. in the gap defined with the bottom 21 of the frame 2. This is the condition taken in the use configurations of the WC. When the tanks are extracted, and separated, the posts can be progressively extracted and extended (figure 8), and thus rotated due to the hinges 72 towards the second position (figure 9) in which there is advantageously provided a snap-stop means, of known type and thus not represented. At this point, superimposing the two tanks as described above, the transport of the unit can occur quite easily by exploiting the wheels 53 of the lower tank and handling the unit using the handle 7 as if it were a trolley bag.

Finally, it should be observed that the pipes 42, 52 of the two tanks do not project from the shape of the tanks, being flush in special cavities provided to this purpose. Thus, they do not lead to any interference neither in the use configurations within the housing 3, nor in the transport arrangement with the two tanks mutually superimposed.

The above description clearly shows the substantial advantages attained by the invention. The overall capacity of the group of tanks may be increased considerably, up to 36 litres (twice the capacity currently ensured by known WC tanks) and even more, without this giving rise to any problems whatsoever. Indeed the modularity, the superimposability in the transport arrangement, and the ease of transfer in such arrangement (leaving in any case the option of carrying out a separate disposal of the single tanks), not only permit the disposal of even such a significant volume, but rather they make it simpler.

The two tanks are stably coupled in the use configuration, and the switch between the first and the second use configuration is extremely comfortable and easy, thus allowing attaining a lasting duration of the use cycle without complex replacements and without additional overall encumbers determined by external reserve tanks.

The present invention has been described with reference to a preferred embodiment thereof. However, it is to be understood that other embodiments may exist that relate to the same invention, all falling within the scope of protection of the attached claims.

## Claims

1. A chemical WC for recreational vehicles comprising a base box-like frame (2) defining a housing (3), a toilet bowl (1) supported by said frame (2), tank means (4, 5) removably housed by said housing (3) and communicating with said bowl (1) for collecting the waste, said housing (3) being elongated according to a longitudinal axis (X) between a front side and a rear side of the bowl and being accessible through a service port on said rear side, **characterized in that** said tank means comprise a first, rear tank (4) and a second, front tank (5), provided with respective top intakes (41, 51), said tanks being arranged in sequence along said longitudinal axis (X) and being displaceable on respective wheels (43, 53) along the same axis between a first and a second use configuration in which said first (4) and said second tank (5) are selectively communicated with said bowl (1) through the respective intakes (41, 51).

2. The WC according to claim 1, comprising tank lock means (6) for locking the tanks in said first and second use configurations, adapted to be disabled by the user to allow the displacement between said configurations and the removal of the tanks through said service port.

3. The WC according to claim 2, wherein said lock means (6) comprise a lock device supported at the bottom by either tank and comprising at least one claw (61) adapted to engage in the two use configurations with respective cavities (22, 23) formed in a bottom (21) of said box-like frame, the device further comprising drive means (62, 63, 64) accessible at the front side of the bowl.

4. The WC according to claim 2, wherein said drive means of said lock device (6) comprise: a crank (62) to which said claw (61) is hinged, the crank being in turn pivotally supported by a bottom of said second tank (5); a rod (63) that longitudinally extends between said bottom of said second tank (5) and the bottom (21) of the box-like frame up to an end projecting outside a front wall (54) of said second tank; and a handgrip (64) pivotally supported by said front wall (54) and hinged to the outer end of the rod (63) so that a manual pull of the handgrip causes a displacement of the rod, the consequent rotation of the crank (62) and with it the shift of the claw from a locking to an unlocking condition, elastic means (65, 66) being further provided for controlling the return of the device to the locking condition in the absence of an outer operation.

5. The WC according to any of the previous claims, wherein in said first use configuration the displacement of said second tank (5) towards the front side is further blocked by abutment against a stop lip (14) projecting downwards from the front side (12) of the bowl (1).

6. The WC according to any of the previous claims, wherein said first and second tank comprise respectively either a protrusion (44) or a recess (57) formed centrally astride said longitudinal axis (X), the protrusion and the recess being adapted to match when the two tanks are close to each other in the use configurations, the recess (57) being shut by a flat piece (58) that extends the bottom of the relative tank and that is adapted to provide a rest to a bottom of the protrusion (44) of the other tank, said flat piece (58) leaving a space in said recess (57) so as to form two side slots (581) adapted to house, in the use configurations, support wheels (43) mounted on side walls of the protrusion (44).

7. The WC according to claim 6, wherein the intakes (41, 51) of the tanks open respectively in a top wall of a protrusion (44) of the first tank and, in the second tank, in a top wall adjacent with its recess (57).

8. The WC according to claim 6 or 7, wherein the tank (5) provided with the recess (57) is adapted to support the other tank superimposed in a transportation arrangement, in such arrangement the recess (57) being adapted to partially house the wheels (43) mounted on the side walls of the protrusion (44).

9. The WC according to claim 8, wherein at least the tank (5) provided with the recess (57) has a discharge spout (52) accommodated in a suitable cavity so as not to project from the outline of the tank and consequently not to cause mechanical interference either in the use configurations inside said frame (2), or in the transportation arrangement with the two tanks (4, 5) mutually superimposed.

10. The WC according to any of the previous claims, wherein one of said tanks comprises a handle (7) to assist the transportation, said handle being movable between a hidden position close to the bottom of the tank and an extracted and extended position in which, when the tank is taken out from the frame (2) and is separated from the other tank, the handle rises perpendicular to the bottom close to a wall of the same tank.

11. The WC according to claim 10, wherein said handle (7) has a structure with two telescopic posts (71), joined at the ends by a grip (72), said posts (71) being slidably engaged with respective hinges (73) turnably supported by the relative tank (5) over a substantially square angle between said hidden position and said extracted position, snap stop means for locking the hinges (73) at least in the extracted position being further provided.

12. The WC according to claim 10 or 11, wherein said handle (7) is mounted on said second tank (5) which has a recess (57) formed centrally astride said longitudinal axis (X) and is adapted to match with a protrusion (44) of the first tank (4) when the two tanks are close to each other in the use configurations, the handle (7) being extractable on a rear wall of said second tank (5) which has support wheels (53) in an outer side position in correspondence with said recess (57).

## Patentansprüche

1. Chemisches WC für Freizeitfahrzeuge, enthaltend einen grundsätzlich kastenartigen Rahmen (2), der ein Gehäuse (3) definiert, eine Toilettenschüssel (1), die von dem Rahmen (2) abgestützt ist, Tankeinrichtungen (4, 5), die entfernbar in dem Gehäuse (3) untergebracht und mit der Schüssel (1) in Verbindung sind, um den Abfall zu sammeln, wobei das Gehäuse (3) gemäß einer Längsachse (X) zwischen einer Vorderseite und einer Rückseite der Schüssel länglich ist und durch einen Service-Port auf der Rückseite zugänglich ist, **dadurch gekennzeichnet, dass** die Tankeinrichtungen einen ersten, hinteren Tank (4) und einen zweiten, vorderen Tank (5) enthalten, die mit jeweiligen oberen Einlässen (41, 51) versehen sind, wobei die Tanks aufeinanderfolgend entlang der Längsachse (X) angeordnet sind und auf jeweiligen Rädern (43, 53) entlang derselben Achse zwischen einer ersten und einer zweiten Anwendungskonfiguration verstellbar sind, in denen der erste (4) und der zweite Tank (5) selektiv durch die jeweiligen Einlässe (41, 51) mit der Schüssel (1) in Verbindung sind.

2. WC nach Anspruch 1, enthaltend zum Verriegeln der Tanks in den ersten und zweiten Anwendungskonfigurationen Tank-Verriegelungseinrichtungen (6), die ausgelegt sind, um durch den Anwender deaktiviert werden, um das Verstellen zwischen den Konfigurationen und die Entnahme der Tanks durch den Service-Port zu ermöglichen.

3. WC nach Anspruch 2, wobei die Verriegelungseinrichtungen (6) eine Verriegelungsvorrichtung enthalten, die am Boden durch jeglichen Tank abgestützt ist und wenigstens eine Klaue (61) enthält, die ausgelegt ist, um in den beiden Anwendungskonfigurationen mit entsprechenden Hohlräumen (22, 23) in Eingriff zu sein, die in einem Boden (21) des kastenartigen Rahmens ausgebildet sind, wobei die Vorrichtung ferner Antriebseinrichtungen (62, 63, 64) enthält, die an der Vorderseite der Schüssel zugänglich sind.

4. WC nach Anspruch 3, wobei die Antriebseinrichtungen der Verriegelungsvorrichtung (6) enthalten: einen Hebel (62), an dem die Klaue (61) angelenkt ist, wobei der Hebel wiederum schwenkbar an einem Boden des zweiten Tanks (5) abgestützt ist; eine Stange (63), die sich in Längsrichtung zwischen dem Boden des zweiten Tanks (5) und dem Boden (21) des kastenartigen Rahmens bis hinauf zu einem Ende erstreckt, das nach außerhalb einer Vorderwand (54) des zweiten Tanks vorsteht; und einen Handgriff (64), der schwenkbar an der Vorderwand (54) abgestützt ist und an dem äußeren Ende der Stange (63) angelenkt ist, so dass ein manuelles Ziehen am Handgriff eine Verstellung der Stange, die daraus folgende Drehung des Hebels (62) und damit die Verschiebung der Klaue von einer Verriegelungs- in einen Entriegelungszustand bewirkt, wobei ferner Elastikeinrichtungen (65, 66) zur Steuerung der Rückkehr der Vorrichtung in den Verriegelungszustand bei Abwesenheit einer äußeren Betätigung vorgesehen sind.

5. WC nach einem der vorhergehenden Ansprüche, wobei in der ersten Anwendungskonfiguration die Verstellung des zweiten Tanks (5) zur Vorderseite hin ferner durch Anlage gegen eine Stopplippe (14) blockiert wird, die von der Vorderseite (12) der Schüssel (1) nach unten vorsteht.

6. WC nach einem der vorhergehenden Ansprüche, wobei die ersten und zweiten Tanks jeweils entweder einen Vorsprung (44) oder eine Ausnehmung (57) enthalten, die mittig rittlings auf der Längsachse (X) ausgebildet sind, wobei der Vorsprung und die Ausnehmung ausgelegt sind, um zusammenzupassen, wenn die beiden Tanks in den Anwendungskonfigurationen dicht beieinander sind, wobei die Ausnehmung (57) von ein flaches Teil (58) geschlossen ist, das sich vom Boden des entsprechenden Tanks aus erstreckt und das ausgelegt ist, um eine Auflage für einen Boden des Vorsprungs (44) des anderen Tanks bereitzustellen, wobei das flache Teil (58) einen Raum in der Ausnehmung (57) belässt, um zwei Seitenschlitze (581) zu bilden, die ausgelegt sind, um in den Anwendungskonfigurationen Stützräder (43) aufzunehmen, die an Seitenwänden des Vorsprungs (44) angebracht sind.

7. WC nach Anspruch 6, wobei sich die Einlässe (41, 51) der Tanks entsprechend in einer oberen Wand eines Vorsprungs (44) des ersten Tanks und in dem zweiten Tank in einer oberen Wand benachbart zu seiner Ausnehmung (57) öffnen.

8. WC nach Anspruch 6 oder 7, wobei der Tank (5), der mit der Ausnehmung (57) versehen ist, ausgelegt ist, um den anderen Tank in einer Transportanordnung überlagert abzustützen, wobei bei einer solchen Anordnung die Ausnehmung (57) ausgelegt ist, um die Räder (43) teilweise aufzunehmen, die an den Seitenwänden des Vorsprungs (44) angebracht sind.

9. WC nach Anspruch 8, wobei zumindest der Tank (5), der mit der Ausnehmung (57) versehen ist, eine Ausgusstülle (52) hat, die in einem geeigneten Hohlraum untergebracht ist, um nicht aus der Kontur des Tanks vorzustehen und folglich keine mechanische Beeinträchtigung sowohl in den Anwendungskonfigurationen innerhalb des Rahmens (2) als auch in der Transportanordnung mit den beiden Tanks (4, 5) gegenseitig überlagert zu bewirken.

10. WC nach einem der vorhergehenden Ansprüche, wobei einer der Tanks ein Handhabe (7) enthält, um den Transport zu unterstützen, wobei die Handhabe zwischen einer verborgenen Position nahe dem Boden des Tanks und einer ausgefahrenen und verlängerten Position beweglich ist, in der, wenn der Tank aus dem Rahmen (2) herausgenommen und von dem anderen Tank getrennt ist, die Handhabe senkrecht zu dem Boden in der Nähe von einer Wand desselben Tanks aufsteigt.

11. WC nach Anspruch 10, wobei die Handhabe (7) eine Struktur mit zwei Teleskopsäulen (71) hat, die an den Enden durch einen Griff (72) verbunden sind, wobei die Säulen (71) verschiebbar mit entsprechenden Scharnieren (73) in Eingriff sind, die an dem jeweiligen Tank (5) über einen im wesentlichen rechten Winkel zwischen der verborgenen Position und der ausgefahrenen Position drehbar abgestützt sind, wobei ferner einrastende Stoppeinrichtung zum Verriegeln der Scharniere (73) zumindest in der ausgefahrenen Position vorgesehen sind.

12. WC nach Anspruch 10 oder 11, wobei die Handhabe (7) an dem zweiten Tank (5) montiert ist, der eine Ausnehmung (57) hat, die zentral rittlings auf der Längsachse (X) ausgebildet ist und ausgelegt ist, um mit einem Vorsprung (44) des ersten Tanks (4) zusammenzupassen, wenn die beiden Tanks in den Anwendungskonfigurationen dicht nebeneinander sind, wobei die Handhabe (7) an einer Rückwand des zweiten Tanks (5) ausziehbar ist, der die Stützräder (53) in einer äußeren Seitenposition in Entsprechung mit der Ausnehmung (57) hat.

## Revendications

1. Un WC chimique pour véhicules de plaisance, comprenant un châssis de base en forme de boîte (2) définissant un logement (3), une cuvette de WC (1) supportée par ledit châssis (2), des moyens de réservoir (4, 5) logés de manière amovible dans ledit logement (3) et communiquant avec ladite cuvette (1) pour recueillir les déchets, ledit logement (3) étant allongé selon un axe longitudinal (X) entre une face avant et une face arrière de la cuvette et étant accessible par une trappe de service sur ladite face arrière, **caractérisé en ce que** lesdits moyens de réservoir comprennent un premier, réservoir arrière (4) et un second, réservoir avant (5), munis d'entrées supérieures respectives (41, 51), lesdits réservoirs étant disposés en séquence le long du dit axe longitudinal (X) et pouvant être déplacés sur des roues respectives (43, 53) le long du même axe entre une première configuration d'utilisation et une seconde configuration d'utilisation dans lesquelles lesdits premier réservoir (4) et second réservoir (5) sont sélectivement en communication avec ladite cuvette (1) via les entrées respectives (41, 51).

2. Le WC selon la revendication 1, comprenant des moyens de blocage (6) de réservoir pour bloquer les réservoirs dans lesdites première et seconde configurations d'utilisation, adaptés pour être désactivés par l'utilisateur pour permettre le déplacement entre lesdites configurations et l'enlèvement des réservoirs par l'intermédiaire de ladite trappe de service .

3. Le WC selon la revendication 2, dans lequel lesdits moyens de blocage (6) comprennent un dispositif de blocage supporté sur le fond par l'un ou l'autre des deux réservoirs et comprenant au moins un crochet (61) apte à coopérer dans les deux configurations d'utilisation avec des cavités respectives (22, 23) formées dans un fond (21) du dit châssis en forme de boîte, le dispositif comprenant en outre des moyens de transmission (62, 63, 64) accessibles depuis la face avant de la cuvette.

4. Le WC selon la revendication 3, dans lequel lesdits moyens de transmission du dit dispositif de blocage (6) comprennent : une came (62) sur laquelle est articulé ledit crochet (61), la came étant à son tour supportée de manière pivotante par un fond du dit second réservoir (5); une tige (63) qui s'étend longitudinalement entre ledit fond du dit second réservoir (5) et le fond (21) du châssis en forme de boîte jusqu'à une extrémité faisant saillie à l'extérieur d'une paroi avant (54) du dit second réservoir; et une poignée de préhension (64) supportée de façon pivotante par ladite paroi avant (54) et articulée sur l'extrémité extérieure de la tige (63) de façon qu'une traction manuelle sur la poignée de préhension provoque un déplacement de la tige, la rotation consécutive de la came (62) et avec elle le déplacement du crochet entre une position de blocage et une position de déblocage, des moyens élastiques (65, 66) étant en outre prévus pour commander le retour du dispositif à la position de blocage en l'absence d'une action extérieure.

5. Le WC selon l'une quelconque des revendications précédentes, dans lequel, dans ladite première configuration d'utilisation, le déplacement du dit second réservoir (5) en direction de la face avant est en outre bloqué en venant buter contre un rebord d'arrêt (14) faisant saillie vers le bas à partir de la face avant (12) de la cuvette (1).

6. Le WC selon l'une quelconque des revendications précédentes, dans lequel lesdits premier et second réservoirs comprennent respectivement soit une saillie (44) soit un évidement (57) réalisés à cheval de façon centrale sur ledit axe longitudinal (X), la saillie et l'évidement étant adaptés pour se correspondre lorsque les deux réservoirs sont proches l'un de l'autre dans les configurations d'utilisation, l'évidement (57) étant fermé par une pièce plate (58) qui prolonge le fond du réservoir correspondant et qui est adaptée pour fournir un appui à une partie inférieure de la saillie (44) de l'autre réservoir, ladite pièce plate (58) laissant un espace dans ledit évidement (57) de manière à former deux fentes latérales (581) adaptées pour loger, dans les configurations d'utilisation, les roues de support (43) montées sur les parois latérales de la saillie (44).

7. Le WC selon la revendication 6, dans lequel les entrées (41, 51) des réservoirs s'ouvrent respectivement sur une paroi supérieure d'une saillie (44) du premier réservoir et, dans le deuxième réservoir, sur une paroi supérieure adjacente à son évidement (57).

8. Le WC selon l'une des revendications 6 et 7, dans lequel le réservoir (5) muni de l'évidement (57) est adapté pour supporter l'autre réservoir superposé dans un agencement de transport, l'évidement (57) étant, dans un tel agencement, adapté pour loger partiellement les roues (43) montées sur les parois latérales de la saillie (44).

9. Le WC selon la revendication 8, dans lequel au moins le réservoir (5) muni de l'évidement (57) présente un manchon de vidange (52) aménagé dans une cavité appropriée afin de ne pas faire saillie à partir du contour du réservoir et en conséquence de ne pas causer des interférences mécaniques soit dans les configurations d'utilisation à l'intérieur du dit châssis (2), soit dans l'agencement de transport avec les deux réservoirs (4, 5) mutuellement superposés.

10. Le WC selon l'une quelconque des revendications précédentes, dans lequel l'un des dits réservoirs comprend une poignée (7) pour aider au transport, ladite poignée étant mobile entre une position rentrée à proximité du fond du réservoir et une position sortie et déployée dans laquelle, lorsque le réservoir est retiré du châssis (2) et séparé de l'autre réservoir, la poignée se dresse perpendiculairement à partir du fond proche d'une paroi du même réservoir.

11. Le WC selon la revendication 10, dans lequel ladite poignée (7) présente une structure à deux montants télescopiques (71), reliés aux extrémités par une prise à main (72), lesdits montants (71) étant montés coulissants et coopérant avec des pivots respectifs (73) montés rotatifs sur le réservoir correspondant (5) selon un angle sensiblement droit entre ladite position rentrée et ladite position sortie, des moyens d'arrêt étant en outre prévus pour bloquer les pivots (73) au moins dans la position sortie.

12. Le WC selon l'une des revendications 10 et 11, dans lequel ladite poignée (7) est montée sur ledit second réservoir (5) qui présente un évidement (57) formé à cheval de façon centrale sur ledit axe longitudinal (X) et est adaptée pour correspondre avec une saillie (44) du premier réservoir (4) lorsque les deux réservoirs sont proches l'un de l'autre dans les configurations d'utilisation, la poignée (7) pouvant être en position sortie sur une paroi arrière du dit second réservoir (5) qui a des roues de support (53) dans une position latérale extérieure en correspondance avec ledit évidement (57).
